# EUROPEAN PATENT APPLICATION

(11) **EP 4 213 145 A1**
(43) Date of publication of application: **19.07.2023**
(21) Application number: 22151573.7
(22) Date of filing: 14.01.2022
(51) Int. Cl.: G10L 15/08, G10L 15/30, G10L 25/51

(54) **DEVICE AND METHOD FOR TRIGGERING A MUSIC IDENTIFICATION APPLICATION**

(71) Applicant: Vestel Elektronik Sanayi ve Ticaret A.S., 45030 Manisa (TR)
(72) Inventor: KIRISKEN, Barbaros, 45030 Manisa (TR); KUTLUAY, Deniz, 45030 Manisa (TR)
(74) Representative: Flint, Adam

(57) **Abstract**

A device (10) receives a list of keywords from a server (50). A microphone (20) of the device (10) receives audio from an environment of the device (10). The device (10) analyses the received audio to identify words in the received audio. The device (10) compares words in the received audio with one or more keywords in the list of keywords. A music identification application is triggered if words in the received audio are deemed to match one or more keywords in the list of keywords. A notification is provided for a user if the music identification application identifies a song that corresponds to words in the received audio.

## Description

### Technical Field

The present disclosure relates to a device and method of operating a device for triggering a music identification application.

### Background

A number of applications exist that identify music (i.e. song title, artist, etc.) based on a short sample that is heard using a microphone on a device. Typically, such music identification applications have to be manually triggered by a user to operate.

### Summary

According to a first aspect disclosed herein, there is provided a method carried out by a device, the method comprising:
receiving a list of keywords from a server;
receiving, at a microphone of the device, audio from an environment of the device;
analysing the received audio to identify words in the received audio;
comparing words in the received audio with one or more keywords in the list of keywords;
triggering a music identification application if words in the received audio are deemed to match one or more keywords in the list of keywords; and
providing a notification for a user if the music identification application identifies a song that corresponds to words in the received audio.

The list of keywords act as "wake-up" words which trigger the carrying out of the music identification application. An advantage of this is that the user does not need to manually trigger the carrying out of the music identification application, which is convenient as the user may be otherwise occupied or may not be able to manually trigger the carrying out of the music identification application for some other reason. The use of wake-up words avoids the music identification application running all the time, which conserves energy at the device and also avoids or minimises privacy problems.

In an example, words in the received audio are deemed to match one or more keywords in the list of keywords if at least two consecutive words in the received audio match two consecutive words in the list of keywords.

In an example, the music identification application operates on a first integrated circuit of the device, and the analysing the received audio, the comparing words in the received audio with one or more keywords in the list of keywords and the triggering a music identification application are carried out by a second integrated circuit of the device.

The first integrated circuit of the device only operates the music identification application if triggered by the second integrated circuit, which only occurs if words in the received audio are deemed to match one or more keywords in the list of keywords as part of the comparison carried out on the second integrated circuit. The first integrated circuit of the device may be a main processor of the device, which operates for example an operating system of the device and controls wireless (e.g. cellular, WiFi, etc.) communications. The second integrated circuit of the device may be a separate processor which is dedicated to the wake-up system. This again conserves energy at the device and also avoids or minimises privacy problems.

In an example, the list of keywords received from the server are words taken from songs at the server.

This means that the music identification application is only triggered if words heard in the environment by the device correspond to words in songs that have been analysed or otherwise received at the server. In turn, this means that the music identification application is only triggered if words heard in the environment correspond to songs, which can help conserve electrical energy and preserve privacy for people in the vicinity of the device.

In an example, the device transmits a request to the server for the server to transmit the list of keywords to the device, wherein the request includes parameters for the songs from which the words in the list of keywords are taken.

For example, the user can specify at the device that the list of keywords only includes words from recent songs, songs from a certain era, songs of a particular genre, songs by a particular artist or band, etc.

In an example, the notification provides a user input that causes the device to at least one of (i) download the song that is identified and (ii) save information identifying the song.

According to a second aspect disclosed herein, there is provided a device comprising at least one processor, a microphone, and data storage, the device being configured to:
receive, at the microphone of the device, audio from an environment of the device;
analyse the received audio to identify words in the received audio;
compare words in the received audio with one or more keywords in a list of keywords stored at the device;
trigger a music identification application if words in the received audio are deemed to match one or more keywords in the list of keywords; and
provide a notification for a user if the music identification application identifies a song that corresponds to words in the received audio.

In an example, the device is configured such that words in the received audio are deemed to match one or more keywords in the list of keywords if at least two consecutive words in the received audio match two consecutive words in the list of keywords.

In an example, the device comprises:
a first integrated circuit on which the music identification application operates; and,
a second integrated circuit of the device on which the analysing the received audio, the comparing words in the received audio with one or more keywords in the list of keywords and the triggering a music identification application are carried out.

In an example, the device is configured to transmit a request to a server for the server to transmit the list of keywords to the device, wherein the request includes parameters for the songs from which the words in the list of keywords are taken.

In an example, the device is configured to accept inputs from a user to set the parameters for the request.

According to a third aspect disclosed herein, there is provided a computer program comprising instructions such that when the computer program is executed on a device, the device is arranged to carry out a method comprising:
receiving a list of keywords from a server;
receiving, at a microphone of the device, audio from an environment of the device;
analysing the received audio to identify words in the received audio;
comparing words in the received audio with one or more keywords in the list of keywords;
triggering a music identification application if words in the received audio are deemed to match one or more keywords in the list of keywords; and
providing a notification for a user if the music identification application identifies a song that corresponds to words in the received audio.

There may be provided a non-transitory computer-readable storage medium storing a computer program as described above.

### Brief Description of the Drawings

To assist understanding of the present disclosure and to show how embodiments may be put into effect, reference is made by way of example to the accompanying drawings in which:
Figure 1 shows schematically an example of a device and a server which are in communication with each other in accordance with an embodiment of the present disclosure;
Figure 2 shows schematically an example of a device hearing sounds in the environment in accordance with an embodiment of the present disclosure;
Figure 3 shows schematically an example of a process carried out at the server; and
Figure 4 shows schematically an example of a process carried out by the device.

### Detailed Description

As mentioned, a number of applications exist that identify music (i.e. song title, artist, etc.) based on a short sample that is heard using a microphone on a device. Typically, such music identification applications have to be manually triggered by a user to operate. This may not be convenient for the user as the user may be otherwise occupied, or may not have a free hand to operate the device to trigger the music identification application. The user may miss the opportunity to trigger the music identification application before the song has finished playing.

An option could be to have the music identification application always operating, so that any audio that is heard by the device is always processed to try to identify songs that are present in the audio. However, this can give rise to privacy concerns and can consume relatively large amounts of energy if the music identification application is "always on". Conserving energy is particularly important in battery-powered devices, such as smart phones, other portable computing devices, etc.

Examples described herein use a list of keywords which act as "wake-up" words which trigger the carrying out of the music identification application at the device. This avoids the user having to manually trigger operation of the music identification application and avoids the music identification application always running. The list of keywords is received from a server, which is typically remote from the device. In examples, the list of keywords received from the server are words taken from songs at the server. The music identification application is triggered to operate if words in songs heard at the device match words in the list of keywords received from the server.

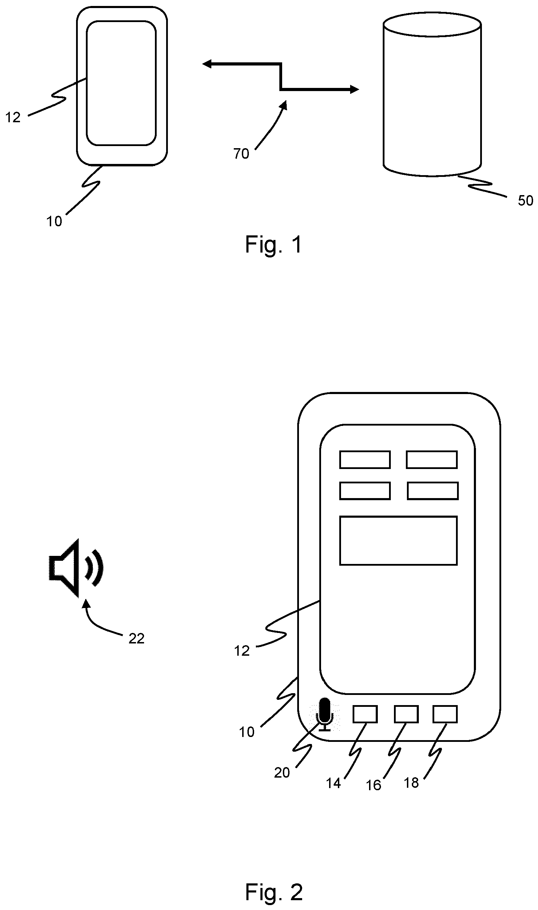

Referring now to the drawings, Figure 1 shows schematically an example of a device 10 and a server 50 in accordance with an embodiment of the present disclosure. The device 10 and the server 50 are able to communicate with each other over one or more networks 70, which may include one or more wired and/or wireless networks, including for example local area networks, the Internet, cellular networks, etc.

The device 10 is typically a user consumer device. The device 10 may be a portable device and may be battery-powered. The device 10 may be for example a laptop or tablet computer, a cellular phone (including a so-called "smart phone"), a media player, etc.

Referring also to Figure 2, the device 10 has a display screen 12, which may be a touch screen which enables touch inputs to be received by the device 10. The device 10 of this example has (at least) a first processor or integrated circuit 14 and a second processor or integrated circuit 16. The first integrated circuit 14 in this example is a main processor of the device 10, which operates for example an operating system of the device 10 and controls wireless (e.g. cellular, WiFi, etc.) communications by the device 10 via antennas, wired network connections, etc. The second integrated circuit 16 is a separate integrated circuit which is dedicated to the wake-up system discussed further below. The device 10 also has the usual volatile and non-volatile data storage, generically indicated at 18. The device 10 has a microphone 20 which converts sound 22 into an electrical signal, which is passed in use to one or both of the first integrated circuit 14 and the second integrated circuit 16.

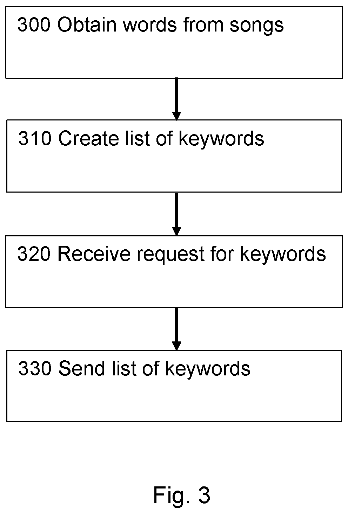

Referring now to Figure 3, this shows schematically an example of a process carried out at the server 50. The server 50 maintains a database of keywords which can be accessed on receiving a request from the device 10 for a list of keywords.

As a first stage at 300, the server 50 obtains words from songs. The server 50 may for example receive words (lyrics) from songs directly, for example from a publisher of the songs. Alternatively or additionally, the server 50 may analyse songs to identify the words in the songs. The songs that are used for this may be obtained from a library of songs. The songs may be only recent songs, such as for example songs first published in the last month or last several months, etc. The server 50 may obtain words from songs on a more-or-less continuous basis, such that new songs are added to the database as and when the songs are released. Alternatively or additionally, the server 50 may have a back catalogue of songs going back years or decades.

At 310, the server 50 creates a list of keywords from the words obtained from the songs. In an example, the words in the list are arranged in sequences of plural words. That is, the list of keywords comprises groups of at least two words in sequence, which correspond to sequences of consecutive words that occur in the songs from which the words are taken. The words that are used for this may only be words from a chorus of the song. This helps to keep down the number of words that needs to be stored, which saves on data storage and processing requirements both at the server 50 and the device 10. As an example to illustrate this, for the song "I Want to Hold Your Hand" by the Beatles, the list of keywords may include the groups of paired sequential words "I wanna", "wanna hold", "hold your" and "your hand" which are taken from the chorus "I wanna hold your hand".

At 320, the server 50 receives a request from the device 10 for a list of keywords. The software on the device 10 may enable the user to set parameters for the songs from which the words in the list of keywords are taken. For example, the user can specify at the device 10 that the list of keywords that is sent by the server 50 only includes words from recent songs (e.g. released in the last month, last 3 months, etc.), songs from a certain era (e.g. released in the 1960s, 1970s, etc.), songs of a particular genre (e.g. pop, rock, etc.), songs by a particular artist or band, recent popular songs in a particular geographical region (e.g., the top 10 tracks in music sales charts for releases in the last month in Turkey or the United Kingdom), language, etc. The request that is sent to the server 50 by the device 10 includes any parameters set by the user. Correspondingly, the server 50 may associate the keywords it stores with corresponding parameters for the songs from which they words were taken, such as one or more of date of release, artist, genre, chart ranking and time period, language, etc. so that the server 50 can respond appropriately to requests that have such parameters. Alternatively or additionally, software on the device 10 may request from the server 50 an update for the list of keywords at regular intervals, such as once a week or once a month, etc. This may be carried out automatically by the device 10. In this way, the device 10 automatically keeps the list of keywords up to date for recently released songs or other songs that have recently been added by the server 50.

At 330, the server 50 responds to the request from the device 10 by sending to the device 10 a list of keywords. If the request from the device 10 includes one or more parameters for the songs, then the server 50 only sends keywords for songs that match those one or more parameters to the device 10.

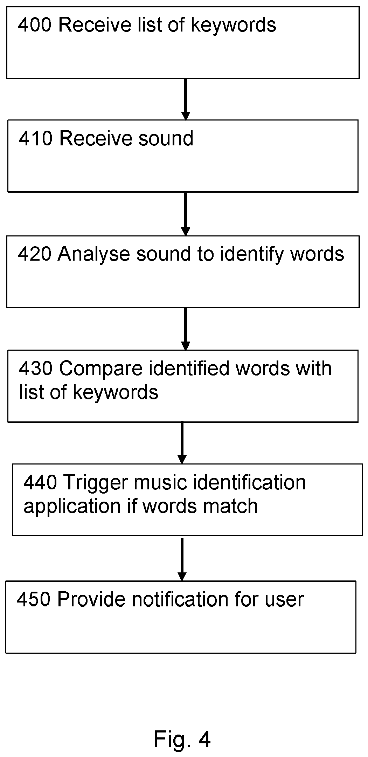

Referring now to Figure 4, this shows schematically an example of a process carried out at the device 10.

At 400, the device 10 receives a list of keywords from the server 50 in response to a request sent by the device 10 in the manner described above. That list of keywords may be a tailored list of keywords for songs that match one or more parameters that are set in the request, if any. The device 10 stores the list of keywords in local data storage of the device 10, which is preferably a non-volatile data storage so that the list of keywords is saved for later use even if the device 10 is switched off.

At 410, the microphone 20 of the device 10 receives audio that is in the environment of the device 10. That is, the microphone 20 receives sounds in the neighbourhood of the device 10.

At 420, the device 10 analyses the sound to identify words in the audio that is received at the microphone 20. In this example, this analysis is part of the wake-up system, as will be discussed, and is carried out by the second integrated circuit 16 which is separate from the first, main, integrated circuit 14.

At 430, the device 10 compares the words that have been identified in the audio that is received at the microphone 20 with the words in the keyword list which has been stored at the device 10. In the case that the list of keywords comprises groups of words in sequence (e.g. groups of two words in sequence), the device 10 compares corresponding groups of words in sequence in the words that have been identified in the audio that is received at the microphone 20 (e.g. here, groups of two words in sequence) with the groups of words in the keyword list. In this example, this comparison is part of the wake-up system, as will be discussed, and is carried out by the second integrated circuit 16

At 440, if the words that have been identified in the audio that is received at the microphone 20 match words in the keyword list which has been stored at the device 10, then a music identification application is triggered. The music identification application then operates to identify the song that is being played and heard in the environment of the device 10, as will be discussed. In this example, the music identification application operates on the first, main, integrated circuit 14 and the triggering of the music identification application on the first integrated circuit 14 is carried out by the second integrated circuit 16.

In this sense, the second integrated circuit 16 acts as a so-called "virtual assistant" or "intelligent virtual assistant" and the list of keywords received from the server 50 act as wake-up words. The keywords are added as quick commands for the virtual assistant operated by the second integrated circuit 16. The second integrated circuit 16 operates to trigger or wake up the first integrated circuit 14 to implement the music identification application if the second integrated circuit 16 determines that sound heard in the environment of the device 10 includes words, or sequences of words, that correspond to words, or sequences of words, in the list of keywords that is stored at the device 10. An advantage of this is that electrical energy is saved at the device 10 as the device 10 only implements the music identification application if words in the environment match words in the keyword list. Another advantage is that third party privacy is better protected as the music identification application is not always operating to analyse any words that have been heard in the environment, and instead only operates if words, or sequences of words, that are heard correspond to words, or sequences of words, in the list of keywords that is stored at the device 10. Indeed, privacy is better maintained if only sequences of two (or more) words that are heard correspond to sequences of two (or more) words that are in the list of keywords as that list of keywords is specifically obtained from existing songs. Using sequences of words instead of just single words makes it less likely that for example ordinary conversation in the environment of the device 10 will result in the music identification application being triggered to operate.

Once triggered, the music identification application operates to identify the song (if any) that is being played in the environment and that has been heard by the microphone 20 of the device 10. The identification of the song may be based, at least initially, on the words that have been identified in the sound heard in the environment of the device 10. As clear, the music identification application is only triggered if the words that have been identified in the sound heard in the environment of the device 10 match words in the keyword list, and the list of keywords has been obtained from songs as discussed above. The list of keywords stored locally at the device 10 may include data for the song from which the individual keywords or groups of keywords have been obtained. In that case, the device 10 can know immediately which song resulted in a match of the words heard in the environment with the words in the stored list of keywords. Alternatively, the device 10 can transmit data concerning the words heard in the environment to the server 50, which then returns data for the corresponding song to the device 10 based on a list of keywords stored at the server 50. On the other hand, many songs have similar words or lyrics, such that many songs include the same groups of words in sequence. Therefore, to provide a better identification of the song that is being heard in the environment, the device 10 may perform a more detailed analysis of the sound that is being heard in the environment. Alternatively or additionally, the device 10 may transmit a sample of the sound that is being heard in the environment to the server 50 for the server 50 to may perform a more detailed analysis of the sound. Either way, such more detailed analysis of the sound may include for example audio signal analysis methods such as pitch and beat analysis, signal spectrum (e.g. time and frequency) analysis, signal energy analysis, etc.

If and when the song has been identified, at 450 the device 10 may then provide a notification for the user. For example, the device 10 may display an icon or the like on the display screen 12 of the device 10. Alternatively or additionally, the device 10 may cause a text or email or social media message or the like to be transmitted to the user via an associated device or email or social media account, etc. The notification or icon, etc., may for example provide the user with the option to purchase or download or stream the identified song. Alternatively or additionally, the notification or icon, etc., may for example provide the user with the option to save information identifying the song on the device 10. This enables the user to easily obtain information identifying the song later if desired. The notification may be arranged to be present or sent even if the song ends. The device 10 may store the song information automatically or even obtain and store the song (i.e. a media sound file) automatically without requiring the user to pressing an "accept option" or the like.

It will be noted that the triggering of the music identification application and sending or presentation of the notification, etc., may all be carried out automatically by the device 10 in the background, without requiring any manual user input. This is convenient for the user as songs can be identified even if the user is otherwise occupied and cannot manually instigate a song search at the time the song is heard by the device 10. Further, the triggering of the music identification application is carried out based on a keyword list that is obtained based on words in songs, which can be adapted as new songs are released and as older songs are added to the library of songs maintained at the server 50. The list of keywords can therefore be dynamic, as it is updated from time to time, and is not a rigid, fixed list of keywords. Further, the list of keywords that is received at and stored at the device 10, which operates as a list of wake-up words for the music identification application, may be narrowed based on parameters set by the user relating to, for example, particular artists, time of release, music genre, etc. This helps to save electrical energy at the device 10 and better protect privacy as the music identification application only operates in more limited circumstances.

It will be understood that the or each processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The or each chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method carried out by a device, the method comprising:
receiving a list of keywords from a server;
receiving, at a microphone of the device, audio from an environment of the device;
analysing the received audio to identify words in the received audio;
comparing words in the received audio with one or more keywords in the list of keywords;
triggering a music identification application if words in the received audio are deemed to match one or more keywords in the list of keywords; and
providing a notification for a user if the music identification application identifies a song that corresponds to words in the received audio.

2. A method according to claim 1, wherein words in the received audio are deemed to match one or more keywords in the list of keywords if at least two consecutive words in the received audio match two consecutive words in the list of keywords.

3. A method according to claim 1 or claim 2, wherein the music identification application operates on a first integrated circuit of the device, and the analysing the received audio, the comparing words in the received audio with one or more keywords in the list of keywords and the triggering a music identification application are carried out by a second integrated circuit of the device.

4. A method according to any of claims 1 to 3, wherein the list of keywords received from the server are words taken from songs at the server.

5. A method according to claim 4, wherein the device transmits a request to the server for the server to transmit the list of keywords to the device, wherein the request includes parameters for the songs from which the words in the list of keywords are taken.

6. A method according to any of claims 1 to 5, wherein the notification provides a user input that causes the device to at least one of (i) download the song that is identified and (ii) save information identifying the song.

7. A device comprising at least one processor, a microphone, and data storage, the device being configured to:
receive, at the microphone of the device, audio from an environment of the device;
analyse the received audio to identify words in the received audio;
compare words in the received audio with one or more keywords in a list of keywords stored at the device;
trigger a music identification application if words in the received audio are deemed to match one or more keywords in the list of keywords; and
provide a notification for a user if the music identification application identifies a song that corresponds to words in the received audio.

8. A device according to claim 7, wherein the device is configured such that words in the received audio are deemed to match one or more keywords in the list of keywords if at least two consecutive words in the received audio match two consecutive words in the list of keywords.

9. A device according to claim 7 or claim 8, the device comprising:
a first integrated circuit on which the music identification application operates; and,
a second integrated circuit of the device on which the analysing the received audio, the comparing words in the received audio with one or more keywords in the list of keywords and the triggering a music identification application are carried out.

10. A device according to any of claims 7 to 9, wherein the device is configured to transmit a request to a server for the server to transmit the list of keywords to the device, wherein the request includes parameters for the songs from which the words in the list of keywords are taken.

11. A device according to claim 10, wherein the device is configured to accept inputs from a user to set the parameters for the request.

12. A computer program comprising instructions such that when the computer program is executed on a device, the device is arranged to carry out a method comprising:
receiving a list of keywords from a server;
receiving, at a microphone of the device, audio from an environment of the device;
analysing the received audio to identify words in the received audio;
comparing words in the received audio with one or more keywords in the list of keywords;
triggering a music identification application if words in the received audio are deemed to match one or more keywords in the list of keywords; and
providing a notification for a user if the music identification application identifies a song that corresponds to words in the received audio.

13. A computer program according to claim 12, wherein the instructions are such that words in the received audio are deemed to match one or more keywords in the list of keywords if at least two consecutive words in the received audio match two consecutive words in the list of keywords.

14. A computer program according to claim 12 or claim 13, wherein the instructions are such that the device transmits a request to the server for the server to transmit the list of keywords to the device, wherein the request includes parameters for the songs from which the words in the list of keywords are taken.

15. A computer program according to any of claims 12 to 14, wherein the instructions are such that the notification provides a user input that causes the device to at least one of (i) download the song that is identified and (ii) save information identifying the song.
